# EUROPEAN PATENT APPLICATION

(11) **EP 4 759 477 A1**
(43) Date of publication of application: **17.06.2026**
(21) Application number: 25752536.0
(22) Date of filing: 06.02.2025
(51) Int. Cl.: B23Q 3/06, B23P 19/04, B05C 5/02, B05C 11/10, H01M 4/04

(54) **APPARATUS FOR ASSEMBLING DIE COATER, AND METHOD FOR ASSEMBLING DIE COATER**

(30) Priority: 08.02.2024 KR 20240019555
(71) Applicant: LG Energy Solution, Ltd., Seoul 07335 (KR)
(72) Inventor: CHOI, Min Hyuck, Daejeon 34122 (KR); KIM, Min Cheol, Daejeon 34122 (KR); PARK, Min Gu, Daejeon 34122 (KR); MOON, Young Gyu, Daejeon 34122 (KR)
(74) Representative: Plasseraud IP
(86) International application number: PCT/KR2025/099301
(87) International publication number: WO 2025/170442

(57) **Abstract**

According to exemplary embodiments, a device for assembling a die coater is provided. The device includes a jig having a Γ shape; a measuring instrument coupled to the jig and configured to measure a relative position of a first die and a shim; an adjuster coupled to the jig and configured to move the shim; and a fixing assembly configured to fix the jig to the first die.

## Description

### [Technical Field]

The present disclosure relates to a device for assembling a die coater and a method for assembling a die coater. This application claims the benefit of priority from Korean Patent Application No. 10-2024-0019555, filed on February 08, 2024, the entire contents disclosed therein are incorporated by reference into this disclosure.

### [Background]

Secondary batteries, unlike primary batteries, are capable of a plurality of charging and discharging. Secondary batteries are widely used as energy sources for various wireless devices such as handsets, laptops, and wireless vacuum cleaners. Recently, due to energy density improvements and economies of scale, the manufacturing cost per unit capacity of secondary batteries has dramatically decreased, and as the driving range of BEVs (battery electric vehicles) has increased to a level equivalent to fuel vehicles, the primary applications of secondary batteries are shifting from mobile devices to mobility.

The electrodes of secondary batteries are the most important components of secondary batteries from the perspective of energy density. The electrodes of secondary batteries can be formed through coating processes, roll press processes, drying processes, slitting processes, and notching processes. Among these, the coating process is a process of applying a slurry containing active materials onto a current collector, and can be performed by a die coater.

### [Summary]

### [Technical Problem]

The technical problem to be solved by the present disclosure is to provide a device for assembling a die coater with improved reliability and a method for assembling a die coater.

### [Technical Solution]

According to exemplary embodiments of the present disclosure for solving the above-described problem, a device for assembling a die coater is provided. The device includes a jig having a Γ shape; a measuring instrument coupled to the jig and configured to measure a relative position of a first die and a shim; an adjuster coupled to the jig and configured to move the shim; and a fixing assembly configured to fix the jig to the first die.

The jig includes a first portion extending in a first direction and a second portion extending in a second direction perpendicular to the first direction.

The fixing assembly is coupled to the first portion of the jig.

The measuring instrument and the adjuster are spaced apart from the fixing assembly in the second direction.

The measuring instrument and the adjuster are coupled to the second portion of the jig.

The measuring instrument is coupled to a first hole of the second portion of the jig, and the adjuster is coupled to a second hole of the second portion of the jig.

The first and second holes are spaced apart from each other in the second direction.

The jig includes a first clamping hole connected to the first hole and extending in the first direction and a second clamping hole connected to the second hole and extending in the first direction.

The device further includes a first fixing device assembled in the first clamping hole and fixing the measuring instrument to the jig; and a second fixing device assembled in the second clamping hole and fixing the adjuster to the jig.

According to exemplary embodiments, a device for assembling a die coater is provided. The device includes a jig including a first portion extending in a first direction and a second portion extending in a second direction perpendicular to the first direction; a measuring instrument coupled to the second portion of the jig and configured to measure a relative position of a first die and a shim; an adjuster coupled to the second portion of the jig and configured to move the shim; and a fixing assembly coupled to the first portion of the jig and configured to fix the jig to the first die.

The measuring instrument and the adjuster are spaced apart from the fixing assembly in the second direction.

The measuring instrument is coupled to a first hole of the second portion of the jig, the adjuster is coupled to a second hole of the second portion of the jig, and the first and second holes are spaced apart from each other in the second direction.

The jig includes a first clamping hole connected to the first hole and extending in the first direction and a second clamping hole connected to the second hole and extending in the first direction.

The device further includes a first fixing device assembled in the first clamping hole and fixing the measuring instrument to the jig; and a second fixing device assembled in the second clamping hole and fixing the adjuster to the jig.

### [Advantageous Effects]

According to exemplary embodiments of the present disclosure, a device for assembling a die coater can measure a relative position between a die and a shim and align the die and the shim without interference with components coupled to the die coater. According to exemplary embodiments, since there is no need to separate components of the die coater from the die when aligning the die and the shim, time required for setting or maintaining/servicing the die coater can be reduced, and accuracy of assembly of the die coater can be improved. Accordingly, reliability of secondary battery manufacturing can be improved.

The effects that can be obtained in exemplary embodiments of the present disclosure are not limited to the above-described effects, and other effects not mentioned can be clearly derived and understood by a person skilled in the art from the description of the disclosure described below. In other words, unintended effects of implementing the exemplary embodiments of the present disclosure may also be derived from the exemplary embodiments of the present disclosure by a person skilled in the art.

### [Brief Description of the Drawings]

FIG. 1 is a perspective view of a die coater according to exemplary embodiments.
FIG. 2 is a perspective view illustrating a device for assembling a die coater according to exemplary embodiments.
FIG. 3 is a plan view illustrating a jig according to exemplary embodiments.
FIG. 4 is a perspective view illustrating a device for assembling a die coater according to exemplary embodiments.
FIG. 5 is a flowchart to describe a method for assembling a die coater according to exemplary embodiments.

### [Detailed Description]

Hereinafter, preferred embodiments of the present disclosure will be described in detail with reference to the accompanying drawings. Prior to this, terms or words used in the present specification and claims should not be interpreted as being limited to conventional or dictionary meanings, and should be interpreted with meanings and concepts that conform to the technical spirit of the present disclosure based on the principle that an inventor can appropriately define concepts of terms to describe his or her own invention in the best way.

Therefore, it should be understood that the embodiments described in the present specification and the configurations shown in the drawings are merely the most preferred embodiments of the present disclosure and do not represent all of the technical spirit of the present disclosure, and that there may be various equivalents and modifications that can replace them at the time of filing the present application.

In addition, when it is determined that detailed descriptions of related known configurations or functions may obscure the gist of the present disclosure in describing the present disclosure, the detailed descriptions thereof are omitted.

Since embodiments of the present disclosure are provided to more completely explain the present disclosure to a person skilled in the art, shapes and sizes of components in the drawings may be exaggerated, omitted, or schematically illustrated for clearer explanation. Therefore, the size or proportion of each component does not entirely reflect the actual size or proportion.

### (first embodiment)

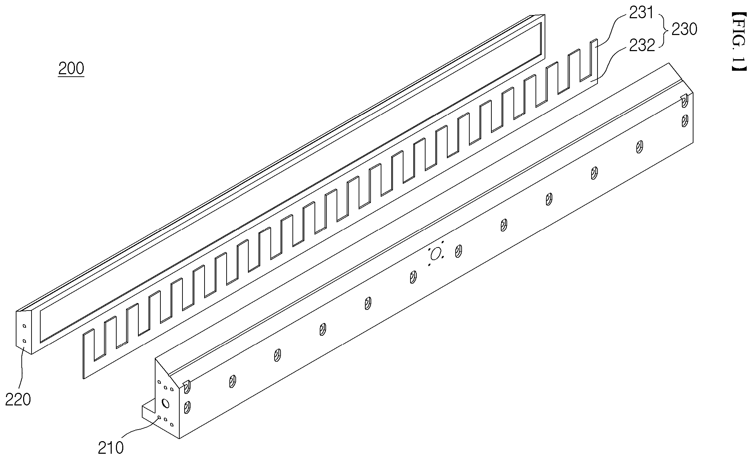

FIG. 1 is a perspective view of a die coater 200 according to exemplary embodiments.

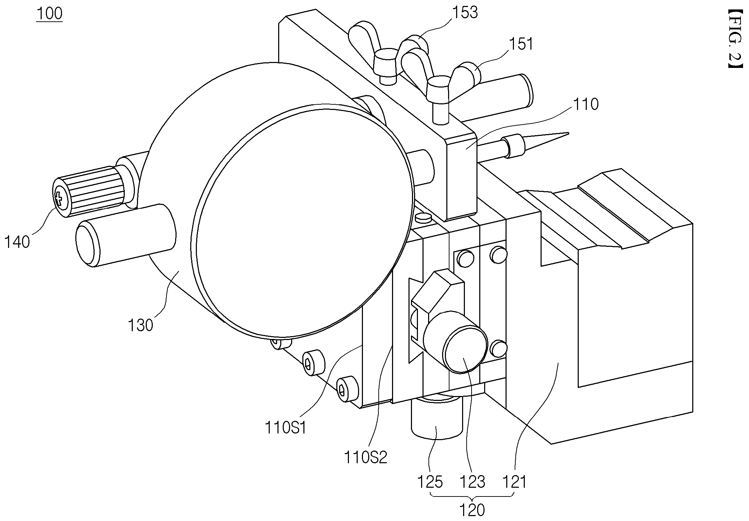

Referring to FIG. 1 and FIG 2, the die coater 200 may include a first die 210, a second die 220, and a shim 230. According to exemplary embodiments, the die coater 200 may be configured to discharge electrode slurry. According to exemplary embodiments, the die coater 200 may be configured to coat electrode slurry on an electrode plate.

The electrode slurry may be used for manufacturing electrodes of secondary batteries. The electrode slurry may include electrode active materials, conductive agents, binders, and solvents. The electrode slurry may be manufactured by dissolving electrode active materials, conductive materials, binders, and the like in a solvent. The solvent may disperse the electrode active materials and the like. The solvent may be an aqueous solvent or a non-aqueous solvent. The solvent may include any one of dimethyl sulfoxide (DMSO), isopropyl alcohol, N-methylpyrrolidone (NMP), acetone, water, and mixtures thereof. The amount of solvent used may be determined based on a target viscosity of the slurry. Parameters for determining the amount of solvent used include coating thickness of the slurry, manufacturing yield, and workability.

The positive electrode active material is a material capable of causing electrochemical reactions. The positive electrode active material may be a lithium transition metal oxide. The positive electrode active material may include, for example, layered compounds such as lithium cobalt oxide (LiCoO₂) and lithium nickel oxide (LiNiO₂) substituted with one or more transition metals; lithium manganese oxide substituted with one or more transition metals; lithium nickel-based oxides represented by the formula LiNi_{1-y}M_{y}O₂ (where M is any one of Co, Mn, Al, Cu, Fe, Mg, B, Cr, Zn, and Ga, and 0.01≤y≤0.7); lithium nickel cobalt manganese composite oxides represented by Li_{1+z}Ni_{b}Mn_{c}Co_{1-(b+c+d)}MₐO_{(2-c)}A_{c} such as Li_{1+z}Ni_{1/3}Co_{1/3}Mn_{1/3}O₂ and Li_{1+z}Ni_{0.4}Mn_{0.4}Co_{0.2}O₂ (where -0.5≤z≤0.5, 0.1≤b≤0.8, 0.1≤c≤0.8, 0≤d≤0.2, 0≤e≤0.2, b+c+d<1, M is any one of Al, Mg, Cr, Ti, Si, and Y, and A is any one of F, P, and Cl); and olivine-based lithium metal phosphates represented by the formula Li₁₊ₓM_{1-y}M'_{y}PO_{4-z}X_{z} (where M is a transition metal, more specifically any one of Fe, Mn, Co, and Ni, M' is any one of Al, Mg, and Ti, X is any one of F, S, and N, -0.5≤x≤+0.5, 0≤y≤0.5, and 0≤z≤0.1).

The negative electrode active material may include, for example, carbon such as non-graphitizable carbon and graphitic carbon. The negative electrode active material may include, for example, metal composite oxides such as LiₓFe₂O₃ (0≤x≤1), LiₓWO₂ (0≤x≤1), SnₓMe₁₋ₓMe'_{y}O_{z} (where Me is any one of Mn, Fe, Pb, and Ge, Me' is any one of Al, B, P, Si, Group 1, Group 2, Group 3 elements of the periodic table, and halogens; 0<x≤1; 1≤y≤3; and 1≤z≤8). The negative electrode active material may include, for example, any one of lithium metal; lithium alloys; silicon-based alloys; and tin-based alloys. The negative electrode active material may include, for example, metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅. The negative electrode active material may also include, for example, conductive polymers such as polyacetylene; Li-Co-Ni based materials, and the like.

The conductive material may have conductivity without causing chemical changes in the finally manufactured secondary battery. The conductive material may include, for example, graphite such as natural graphite or artificial graphite; carbon black such as acetylene black, Ketjen black, channel black, furnace black, lamp black, and thermal black; conductive fibers such as carbon fibers or metal fibers; metal powders such as carbon fluoride, aluminum, and nickel powder; conductive whiskers such as zinc oxide and potassium titanate; conductive metal oxides such as titanium oxide; polyphenylene derivatives, and the like.

The binder may improve bonding between active materials and conductive materials and bonding force to electrode plates. The binder may include, for example, polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene butadiene rubber, fluorine rubber, various copolymers, and the like.

A sheet-shaped electrode may be formed by applying electrode slurry containing electrode active materials on an electrode plate, and drying and rolling to form an electrode composite layer. The electrode slurry may be applied on the electrode plate by a coating die. The coating die may be, for example, a slot die. The electrode plate may be a positive electrode plate or a negative electrode plate, and the electrode active material may be a positive electrode active material or a negative electrode active material.

The thickness of the positive electrode plate may range from about 3 µm to about 500 µm. The positive electrode plate may not cause chemical changes in the finally manufactured secondary battery and may have high conductivity. The positive electrode plate may include, for example, any one of stainless steel, aluminum, nickel, titanium, calcined carbon, and aluminum. The positive electrode plate may also include stainless steel surface-treated with carbon, nickel, titanium, silver, and the like. The surface of the positive electrode plate may include a fine uneven structure to enhance adhesion of active materials. The shape of the positive electrode plate may include any one of film, sheet, foil, net, porous, foam, and nonwoven fabric.

The thickness of the negative electrode plate may range from about 3 µm to about 500 µm. The negative electrode plate may not cause chemical changes in the finally manufactured secondary battery and may have high conductivity. The negative electrode plate may include any one of copper, stainless steel, aluminum, nickel, titanium, calcined carbon, and aluminum-cadmium alloy. The negative electrode plate may also include stainless steel surface-treated with carbon, nickel, titanium, silver, and the like. The surface of the negative electrode plate may include a fine uneven structure to enhance adhesion of active materials. The shape of the negative electrode plate may include any one of film, sheet, foil, net, porous, foam, and nonwoven fabric.

The shim 230 may be interposed between the first die 210 and the second die 220. The first die 210 may contact a lower surface of the shim 230. The second die 220 may contact an upper surface of the shim 230.

Hereinafter, as described above, the technical spirit of the present disclosure is explained based on embodiments where the first die 210 and the second die 220 are separate elements. A person having ordinary skill in the art will be able to easily reach embodiments where the first die 210 and the second die 220 are integrated to form an integral die based on what is described herein.

According to exemplary embodiments, the first die 210 and the second die 220 may have symmetrical shapes with respect to each other. According to exemplary embodiments, each of the first die 210 and the second die 220 may have approximately a truncated pyramid shape, but is not limited thereto.

The first die 210 may include a manifold and a slurry supply hole connected to the manifold. The electrode slurry may flow into the manifold through the slurry supply hole. After the electrode slurry fills the manifold, the electrode slurry may be discharged to the outside of the die coater 200.

The shim 230 may include a plurality of guides 231 and a base 232. The electrode slurry may be discharged to the outside from the manifold through slits of the shim 230. The slits may be spaces between the plurality of guides 231. The shim 230 may be configured to control a discharge amount of electrode slurry and a discharge method (for example, the number of coated part lanes formed in coating of slurry).

The manifold may have a well shape with a predetermined depth from an upper surface of the first die 210. The manifold may include a first side and a second side that are substantially parallel to each other. The first side may be in a direction where electrode slurry is discharged. The second side may be opposite to the first side. The manifold may include an inclined surface connected to the first side, and accordingly, electrode slurry may be stably discharged from the die coater 200.

FIG. 2 is a perspective view illustrating a device for assembling a die coater 100 according to exemplary embodiments.

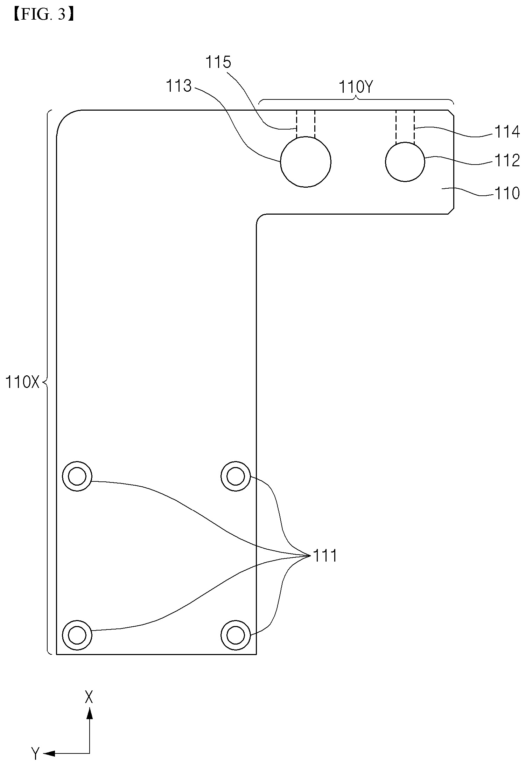

FIG. 3 is a plan view illustrating a jig 110 according to exemplary embodiments.

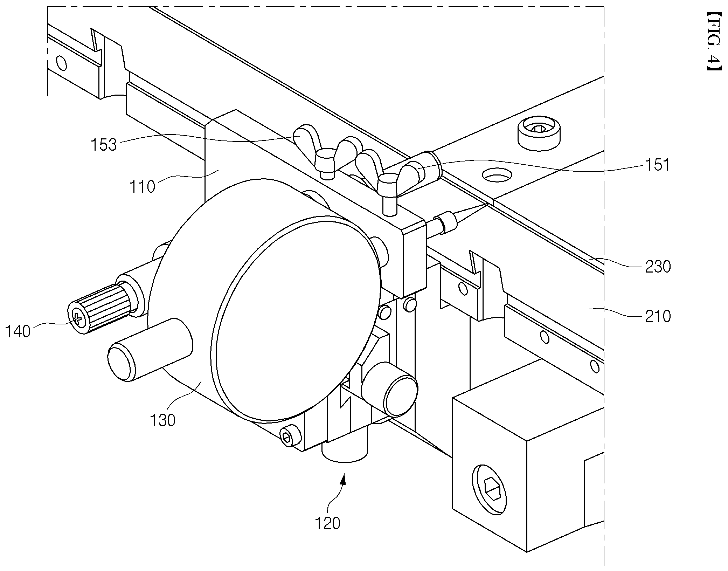

FIG. 4 is a perspective view illustrating a device for assembling a die coater 100 according to exemplary embodiments.

Referring to FIG. 1 to FIG. 4, a device for assembling a die coater 100 may be configured to assemble a die coater 200. The device for assembling a die coater 100 may be configured to measure a relative position of a first die 210 and a shim 230, and to align the first die 210 and the shim 230. Accurate alignment between the first die 210 and the shim 230 may improve precision and reliability of a coating process. The device for assembling a die coater 100 may include a jig 110, a fixing assembly 120, a measuring instrument 130, and an adjuster 140.

The jig 110 may have a Γ -shape. The jig 110 may include a first portion 110X extending in an X direction and a second portion 110Y extending in a Y direction. The X direction and the Y direction may be substantially perpendicular to each other. The second portion 110Y may be connected to the first portion 110X. The second portion 110Y may protrude from the first portion 110X.

A width of the first portion 110X in the Y direction may be different from a width of the second portion 110Y in the X direction. The width of the first portion 110X in the Y direction may be larger than the width of the second portion 110Y in the X direction, but is not limited thereto.

The first portion 110X may include a plurality of coupling holes 111. The plurality of coupling holes 111 may be used for coupling the fixing assembly 120 and the jig 110. The fixing assembly 120 and the jig 110 may be fixed by bolting using the plurality of coupling holes 111, but is not limited thereto.

The second portion 110Y may include first and second holes 112 and 113. The first hole 112 may be used for coupling the measuring instrument 130 and the jig 110. The second hole 113 may be used for coupling the adjuster 140 and the jig 110. The first and second holes 112 and 113 may be spaced apart in the Y direction.

The second portion 110Y may include a first clamping hole 114 connected to the first hole 112 and a second clamping hole 115 connected to the second hole 113. The first and second clamping holes 114 and 115 may extend in the X direction. The first and second clamping holes 114 and 115 may be used for coupling with a first fixing device 151 and a second fixing device 153.

The jig 110 may include a first surface 110S1 and a second surface 110S2. The first and second surfaces 110S1 and 110S2 may be substantially parallel to each other. The first and second surfaces 110S1 and 110S2 may be parallel to each of the X direction and the Y direction. The plurality of coupling holes 111, the first hole 112, and the second hole 113 may extend from the first surface 110S1 to the second surface 110S2.

The fixing assembly 120 may be disposed on the second surface 110S2 of the jig 110. The fixing assembly 120 may include a magnet 121, a first adjuster 123, and a second adjuster 125. The magnet 121 may include an electromagnet. The magnet 121 may fix the fixing assembly 120 to the first die 210. The first adjuster 123 may be configured to adjust a position in the Y direction between the magnet 121 and the jig 110. The second adjuster 125 may be configured to adjust a position in the X direction between the magnet 121 and the jig 110. Through manipulation of the first adjuster 123 and the second adjuster 125, the device for assembling a die coater 100 may be calibrated.

The measuring instrument 130 may penetrate through the first hole 112. The measuring instrument 130 may be inserted into the jig 110 from the first surface 110S1. A first fixing device 151 inserted through the first clamping hole 114 may fix the measuring instrument 130. The measuring instrument 130 may be any one of a contact type or a non-contact type. The contact type measuring instrument 130 may include a probe configured to contact the shim 230. The non-contact type measuring instrument 130 may be an optical sensing type and may include a fiber optical system.

The adjuster 140 may penetrate through the second hole 113. The adjuster 140 may be inserted into the jig 110 from the first surface 110S1. A second fixing device 153 inserted through the second clamping hole 115 may fix the adjuster 140. The adjuster 140 may be configured to move the shim 230 based on the relative position of the first die 210 and the shim 230 measured by the measuring instrument 130.

According to exemplary embodiments, the adjusting instrument 140 may include an adjusting screw and a scale indicating a degree of movement of the shim 230, and accordingly, the first die 210 and the shim 230 may be accurately aligned. In addition, the adjuster 140 may include a torque limiting device. When torque exceeding a threshold is applied to the adjuster 140 by the torque limiting device, a screw of the adjuster 140 may skid, thereby preventing excessive force from being applied to the shim 230 and preventing damage to the shim 230.

The die coater 200 may include a plurality of components connected to the first die 210. The plurality of components may include, for example, material supply lines for providing electrode slurry. According to exemplary embodiments, the measuring instrument 130 and the adjuster 140 coupled to the Γ -shaped jig 110 may be spaced apart from the fixing assembly 120 coupled to the jig 110 in the Y direction. Accordingly, interference between the device for assembling a die coater 100 and the plurality of components coupled to the first die 210 may be prevented, and the shim 230 may be aligned with the first die 210 without separation of the plurality of components.

According to exemplary embodiments, since there is no need to separate components of the die coater 200 from the first die 210 when aligning the first die 210 and the shim 230, time required for maintaining and servicing the die coater 200 may be reduced, and accuracy of assembly of the die coater 200 may be improved.

### (second embodiment)

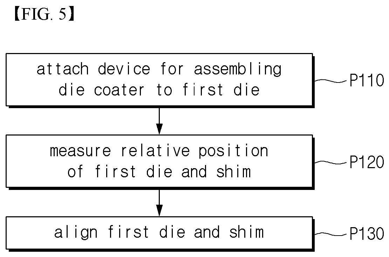

FIG. 5 is a flowchart to describe a method for assembling a die coater according to exemplary embodiments.

Referring to FIG. 2, FIG. 4, and FIG. 5, at P110, the device for assembling a die coater 100 may be attached to the first die 210. After aligning the first die 210 and the device for assembling a die coater 100, by turning on the magnet 121, the device for assembling a die coater 100 may be attached to the first die 210. After the device for assembling a die coater 100 is attached to the first die 210, calibration through manipulation of the first and second adjusters 123 and 125 may be further performed.

Subsequently, at P120, a relative position of the first die 210 and the shim 230 may be measured. The relative position of the first die 210 and the shim 230 may be measured by the measuring instrument 130.

Subsequently, at P130, the first die 210 and the shim 230 may be aligned. The alignment of the first die 210 and the shim 230 may be based on the relative position of the first die 210 and the shim 230 measured at P120. The first die 210 and the shim 230 may be aligned by the adjuster 140.

For alignment of the first die 210 and the shim 230, the processes of P110 to P130 may be repeatedly performed, and the device for assembling a die coater 100 may be coupled to different positions in a lateral direction of the die coater 200 for each iteration.

As above, the present disclosure has been described in more detail through drawings and embodiments. However, it should be understood that the configurations described in the drawings or embodiments described in the present specification are merely one embodiment of the present disclosure and do not represent all of the technical spirit of the present disclosure, and that there may be various equivalents and modifications that can replace them at the time of filing the present application without departing from the spirit and scope of the present disclosure.

## Claims

1. A device for assembling a die coater, comprising:
a jig having a Γ shape;
a measuring instrument coupled to the jig and configured to measure a relative position of a first die and a shim;
an adjuster coupled to the jig and configured to move the shim; and
a fixing assembly configured to fix the jig to the first die.

2. The device for assembling the die coater of claim 1, wherein the jig comprises a first portion extending in a first direction and a second portion extending in a second direction perpendicular to the first direction.

3. The device for assembling the die coater of claim 2, wherein the fixing assembly is coupled to the first portion of the jig.

4. The device for assembling the die coater of claim 2, wherein the measuring instrument and the adjuster are spaced apart from the fixing assembly in the second direction.

5. The device for assembling the die coater of claim 2, wherein the measuring instrument and the adjuster are coupled to the second portion of the jig.

6. The device for assembling the die coater of claim 2, wherein the measuring instrument is coupled to a first hole of the second portion of the jig, and the adjuster is coupled to a second hole of the second portion of the jig.

7. The device for assembling the die coater of claim 6, wherein the first and second holes are spaced apart from each other in the second direction.

8. The device for assembling the die coater of claim 6, wherein the jig comprises a first clamping hole connected to the first hole and extending in the first direction and a second clamping hole connected to the second hole and extending in the first direction.

9. The device for assembling the die coater of claim 8, further comprising:
a first fixing device assembled in the first clamping hole and fixing the measuring instrument to the jig; and
a second fixing device assembled in the second clamping hole and fixing the adjuster to the jig.

10. A device for assembling a die coater, comprising:
a jig comprising a first portion extending in a first direction and a second portion extending in a second direction perpendicular to the first direction;
a measuring instrument coupled to the second portion of the jig and configured to measure a relative position of a first die and a shim;
an adjuster coupled to the second portion of the jig and configured to move the shim; and
a fixing assembly coupled to the first portion of the jig and configured to fix the jig to the first die.

11. The device for assembling the die coater of claim 10, wherein the measuring instrument and the adjuster are spaced apart from the fixing assembly in the second direction.

12. The device for assembling the die coater of claim 10, wherein the measuring instrument is coupled to a first hole of the second portion of the jig, the adjuster is coupled to a second hole of the second portion of the jig, and the first and second holes are spaced apart from each other in the second direction.

13. The device for assembling the die coater of claim 12, wherein the jig comprises a first clamping hole connected to the first hole and extending in the first direction and a second clamping hole connected to the second hole and extending in the first direction.

14. The device for assembling the die coater of claim 13, further comprising:
a first fixing device assembled in the first clamping hole and fixing the measuring instrument to the jig; and
a second fixing device assembled in the second clamping hole and fixing the adjuster to the jig.
